(19) Europäisches Patentamt
European Patent Office
Office européen des brevets

(11) EP 0 962 094 B1

(12) EUROPEAN PATENT SPECIFICATION

(45) Date of publication and mention
of the grant of the patent:
**17.09.2003 Bulletin 2003/38**

(51) Int Cl.⁷: **H04N 5/913**

(86) International application number:
**PCT/IB98/01971**

(21) Application number: **98955863.0**

(22) Date of filing: **07.12.1998**

(87) International publication number:
**WO 99/033266 (01.07.1999 Gazette 1999/26)**

(54) **EMBEDDING SUPPLEMENTAL DATA IN AN ENCODED SIGNAL**

INTEGRATION VON ZUSÄTZLICHEN DATEN IN EINEM KODIERTEN SIGNAL

INTEGRATION DE DONNEES SUPPLEMENTAIRES DANS UN SIGNAL CODE

(84) Designated Contracting States:
**AT BE DE FR GB IE IT NL PT**

(30) Priority: **22.12.1997 EP 97204056**

(43) Date of publication of application:
**08.12.1999 Bulletin 1999/49**

(73) Proprietor: **Koninklijke Philips Electronics N.V.**
**5621 BA Eindhoven (NL)**

(72) Inventor: **NUIJTEN, Petrus**
**NL-5656 AA Eindhoven (NL)**

(74) Representative: **Schmitz, Herman Jan Renier**
**Philips**
**Intellectual Property & Standards**
**P.O. Box 220**
**5600 AE Eindhoven (NL)**

(56) References cited:
**EP-A2- 0 766 468**      **WO-A3-98/33324**
**GB-A- 2 285 561**

• **ISCAS'98, PROCEEDINGS OF THE 1998 IEEE**
**INTERNATIONAL SYMPOSIUM ON CIRCUITS**
**AND SYSTEMS PART, Vol. 1, New York, USA, p.**
**385-388.**

# Description

## FIELD OF THE INVENTION

The invention relates to a method and arrangement for embedding supplemental data in a signal, comprising the steps of encoding the signal in accordance with an encoding process which includes the step of feeding back the encoded signal to control said encoding, and modifying selected samples of the encoded signal to represent said supplemental data.

## BACKGROUND OF THE INVENTION

There is a growing need to accommodate supplemental data in audio and video signals in a perceptually invisible manner. For example, watermarks are to be embedded in multimedia assets to identify the source or copyright status of documents and audio-visual programs. The watermark provides legal proof of the copyright owner, allows tracing of piracy, and supports the protection of intellectual property.

A known method of watermarking a video signal as defined in the opening paragraph is disclosed in F.Hartung and B.Giros: "Digital Watermarking of Raw and Compressed Video", SPIE Vol. 2952, pp. 205-213. Watermarking is herein achieved by modifying selected DCT coefficients in the output bitstream of an MPEG2 encoder. As is generally known, an MPEG2 encoder is a predictive encoder including a feedback loop to control the encoding process. A prediction error (the difference between the input signal and a prediction therefor) is encoded rather than the input signal itself. The prediction signal is obtained by locally decoding the encoded signal.

In the prior-art method, the watermarks are inserted after conventional coding. The capacity available for watermarking the encoded signal in this manner appears to be restricted.

## OBJECT AND SUMMARY OF THE INVENTION

It is an object of the invention to provide a method of embedding supplemental data in an encoded audio or video signal, which allows more bits of the encoded signal to be altered without substantially affecting the perceptual quality.

To this end, the method according to the invention is defined by the steps recited in claim 1. Claim 4 defines the corresponding arrangement. Claim 14 defines the signal generated by the method of claim 1, and claim 15 a recording medium for storing said signal.

The step of embedding supplemental data prior to feeding back the signal has also been proposed in Applicant's non-published European Patent Application No. 97200197.8 (attorney's docket PHN 16.209). With this step it is achieved that adverse effects of a sample modification will be compensated in subsequent encoder operations. However, the initial disturbance of the sample modification remains. The invention is based on the recognition that the encoding quality is further improved by deliberately modifying one or more signal samples prior to a selected sample. In fact, the encoded signal is slightly predistorted in order to minimize the coding errors yet to come.

The invention is particularly useful for embedding supplemental data in unity bit encoded signals. Unity bit encoders such as delta modulators, sigma-delta modulators, and noise shape encoders produce a one-bit output sample in each encoding step. The encoded signal is very vulnerable to watermarking. Sigma-delta modulators, for example, which are envisaged for recording high-quality audio on DVD-Audio at a sampling frequency of 2,822,400 (64*44100) Hz have a signal-to-noise ratio of 115 dB. Watermarking such a sigma-delta modulated signal in a manner as taught by the prior art, i.e. after conventional coding, appears to raise the quantization noise considerably. For example, replacing every 100th bit of a sigma-delta modulated audio signal by a watermark bit will raise the quantization noise to -60 dB, which is clearly unacceptable. Watermarking as proposed in Applicant's copending European Patent Application No. 97200197.8 allows every 100th bit to be replaced at the expense of only 1 dB increase of the quantization noise.

Not only does the invention further improve the encoding quality in terms of signal-to-noise reduction. It is well known that sigma-delta modulators with a loop filter of an order > 2 run into instability problems for large input signals. This instability is usually prevented by prohibiting the input signal to exceed a predetermined range. The invention also provides a solution to these kinds of instability problems and related amplitude clipping problems.

Other objects, features and advantages of the present invention will become apparent upon perusal of the following description in conjunction with the appended drawings, wherein:

## BRIEF DESCRIPTION OF THE DRAWINGS

Fig. 1 shows an arrangement for embedding supplemental data in a delta-modulated signal in accordance with the invention.

Figs. 2-4 show signal waveforms to illustrate the operation of the arrangement shown in Fig. 1.

Fig. 5 shows a flow chart to illustrate the operation of a modification circuit which is shown in Fig. 1.

Fig. 6 shows an arrangement for embedding supplemental data in a sigma-delta modulated signal in accordance with the invention.

Fig. 7 shows a third-order sigma-delta modulator filter which is used in the arrangement shown in Fig. 6.

Figs. 8, 9, 10A-10D and 11A-11C show signal waveforms to illustrate the operation of the arrangement shown in Fig. 6.

## DESCRIPTION OF EMBODIMENTS

The invention will be described with reference to unity bit encoders, but it will be understood that the teaching can also be applied to other types of predictive encoders such as DPCM (e.g. MPEG) encoders. A delta-modulator arrangement will be described first because of its easy-to-understand operation. Subsequently, a sigma-delta modulator arrangement will be described which will more likely be used in practical encoding systems.

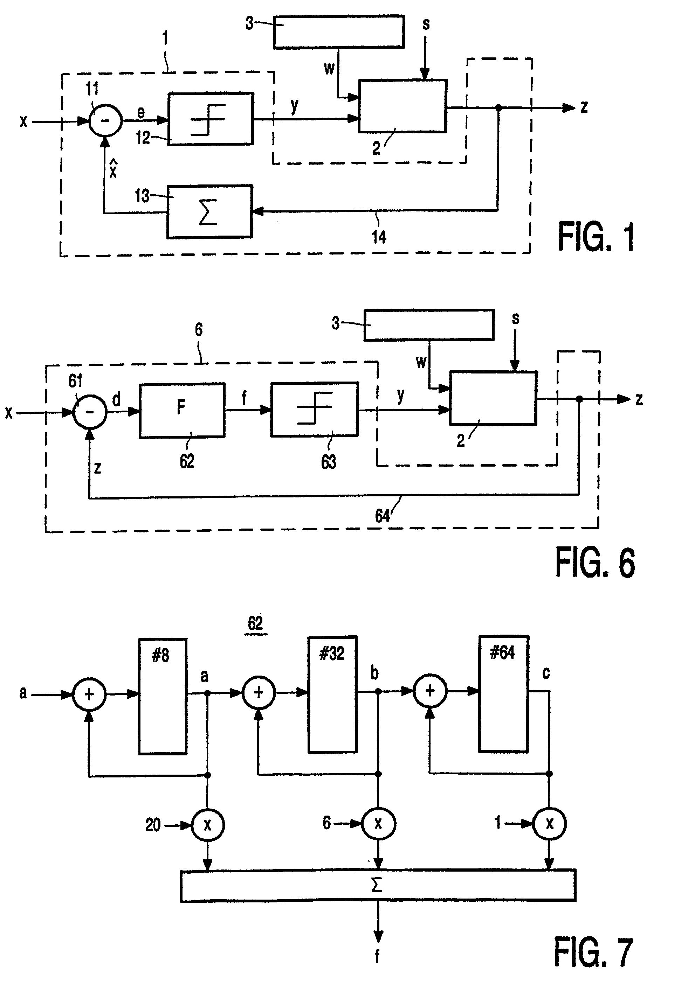

Fig. 1 shows an arrangement for embedding supplemental data in a delta-modulated signal in accordance with the invention. The arrangement comprises a conventional delta modulator **1** which includes a subtracter **11**, a polarity detector **12** and a decoding filter **13.** The subtracter **11** generates a prediction error signal $e$ by subtracting a prediction signal $\hat{x}$ from the input signal $x$. The prediction error $e$ is applied to the polarity detector **12** which produces, at a rate determined by a sampling frequency $f_s$ (not shown), an output sample "+1" for $x \geq \hat{x}$ and an output sample "-1" for $x < \hat{x}$. A feedback loop **14** includes the local decoder **23** (a summer or integrator) to obtain the prediction signal $\hat{x}$.

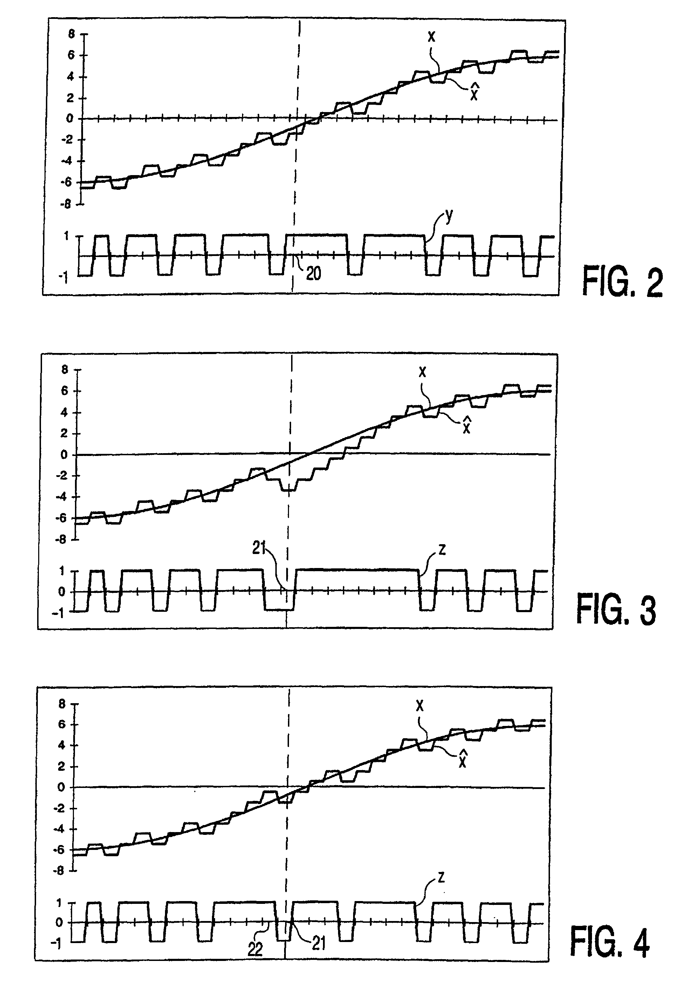

In a conventional delta modulator, the feedback loop **14** is connected to the output of the polarity detector **12**. Fig. 2 shows waveforms of such a conventional delta modulator. More particularly, Fig. 2 shows the input signal $x$, the prediction signal $\hat{x}$ and the encoded output signal $y$ of the conventional delta modulator. Note that prediction signal $\hat{x}$ is also the output signal of a receiver (not shown in Fig. 1).

With reference to Fig. 1 again, the arrangement in accordance with the invention comprises a modification circuit **2** which is connected between the polarity detector **12** and the feedback loop **14**. The modification circuit modifies selected ones of the polarity detector's output bits in response to a selection signal s. For example, the modification circuit replaces every 100th bit of the encoded signal $y$ by a bit of a watermark data pattern $w$ which is stored in a watermark data register **3**. Alternatively, the modification circuit inverts selected bits, the number of bit periods between said inverted bits representing the watermark data pattern.

Fig. 3 elucidates the effect of modifying a selected bit **20** of the encoded signal $y$ by a watermark data bit $w$. The input signal $x$ (the same signal as in Fig. 2), the prediction signal $\hat{x}$ and the modified encoded signal $z$ are shown in this Figure. Reference numeral **21** denotes the embedded watermark bit. As has been attempted to show in the Figure, the embedded watermark bit has the value "-1" which differs from the value "+1" of encoded signal bit **20**. Recalling that the prediction signal $\hat{x}$ is also the output signal of a receiver, it can easily be seen that the bit modification increases the quantization noise. Because the modified signal $z$ is fed back to the encoder's input, the quantization error will subsequently be compensated and eventually eliminated.

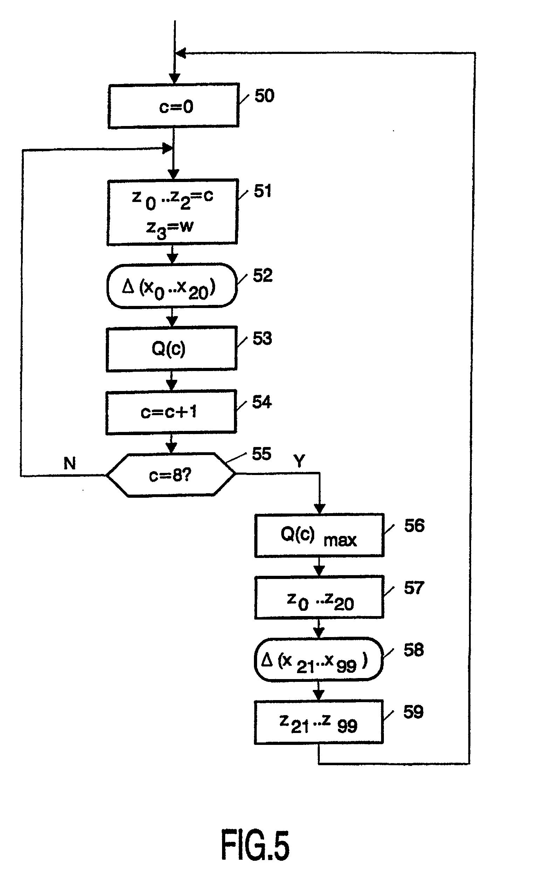

In accordance with the invention, the modification circuit **2** (Fig. 1) is arranged to modify also at least one of the bits preceding the watermark if that is found to improve the encoding quality. An example thereof is shown in Fig. 4. Again, the input signal $x$, the prediction signal $\hat{x}$, the modified encoded signal $z$ and the watermark bit **21** are shown. In addition, a bit **22** which precedes the watermark bit **21** is also modified. A comparison of Fig. 3 with Fig. 2 immediately shows that the overall quantization error is thereby further reduced. The encoding quality is thus considerably improved.

In the example shown in Fig. 3, a good performance is obtained by modifying the bit immediately preceding the watermark bit. This is not always the case. Modification of the 2nd, 3rd, .. etc. bit preceding the watermark bit, or a combination thereof, may improve the performance even more. An example thereof will be given later.

To obtain the above described effect, the arrangement shown in Fig. 1 is adapted to execute the delta modulation process for various combinations of preceding bits, and select the combination which gives the best result. Said testing of various bit combinations is herein also referred to as "looking ahead" and the bits preceding the watermark bit which are being considered for modification are referred to as "look-ahead" bits.

The modification process is performed under the control of the modification circuit **2**. The circuit can be implemented in software or hardware, depending on practical aspects such as speed and hardware complexity. Fig. 5 shows a flow chart to illustrate the operation of the circuit. It is assumed that the input signal $x$ is stored on a storage medium (not shown in Fig. 1) and that every 100th bit of the encoded signal $y$ is to be replaced by a watermark bit $w$. To this end, the input signal $x$ is divided into segments each comprising 100 input samples $x_0..x_{99}$. For each segment, the output signal $z$ comprises 100 bits $z_0..z_{99}$ in which $z_0..z_2$ are three look-ahead bits and $z_3$ is the watermark bit.

In a step **50,** a 3-bit binary coded number c is given an initial value zero. The number c represents a current combination of the three look-ahead bits. In a step **51,** the three bits of c are assigned to $z_0..z_2$. That is, $z_i$ is set to "+1" if the corresponding bit of $c$ is "1" and $z_i$ is set to "-1" if the corresponding bit of c is "0". Also in the step **51,** the current watermark bit w to be embedded is assigned to $z_3$ in the same manner. In a sub-routine **52,** the delta-modulation process is applied to a given number of input samples, say $x_0..x_{20}$, to observe the behavior of the loop for the pre-assigned values of $z_0..z_3$. The corresponding output bit sequence $z_0..z_{20}$ is stored in a buffer memory (not shown in Fig. 1). In a step **53,** the encoding quality $Q(c)$ of the delta-modulation process for the current combination c of look-ahead bits is determined and stored in the buffer memory. In this example, the encoding quality is represented by the mean square error (MSE) between the input signal and the prediction signal:

$$MSE(c) = \sum_{n=0}^{20} (x_n - \hat{x}_n)^2$$

The number c is then incremented by one (step **54**) to create a new combination of look-ahead bits $z_0..z_2$ and calculate the corresponding value of MSE($c$). As long as not all combinations have been processed (step **55**), the delta modulation of the sequence $x_0..x_{20}$ is repeated. Obviously (and therefore not shown in the Figure), the same initial integrator signals are used each time. If all combinations have been processed, the maximal encoding quality $Q(c)$ is determined in a step **56.** To this end, the number $c$ for which MSE($c$) is minimal is looked up in the buffer memory. In a step **57,** the encoded sequence $z_0..z_{20}$ corresponding to said minimal MSE is read from the buffer memory and applied to the encoder's output terminal. Then, in a sub-routine **58,** the rest $x_{21}..x_{99}$ of the segment of input samples is encoded and, in a step **59,** applied to the encoder's output. Having thus encoded a segment of 100 input samples, the arrangement returns to step **50** for processing the next segment.

It will be appreciated that a number of parameter values in the above described encoding process, such as the length of a segment (here 100), the number of look-ahead bits (here 3), and the number of output bits which are evaluated (here 20), are given by way of example only. It is also to be noted that the encoding quality may be expressed by other parameters, for example, the largest difference between an input sample $x_n$ and the corresponding prediction $\hat{x}$.

A sigma-delta modulator in accordance with the invention will now be described. Sigma-delta modulation is envisaged for recording high-quality audio on the audio version of the Digital Versatile Disk (DVD-Audio). It differs from delta modulation in that the input signal $x$ is filtered, prior to encoding, by the same filter as the filter in the prediction loop of a delta modulator. The filters in the input path and feedback path are then replaced by a single filter in the forwardpath of the encoding loop.

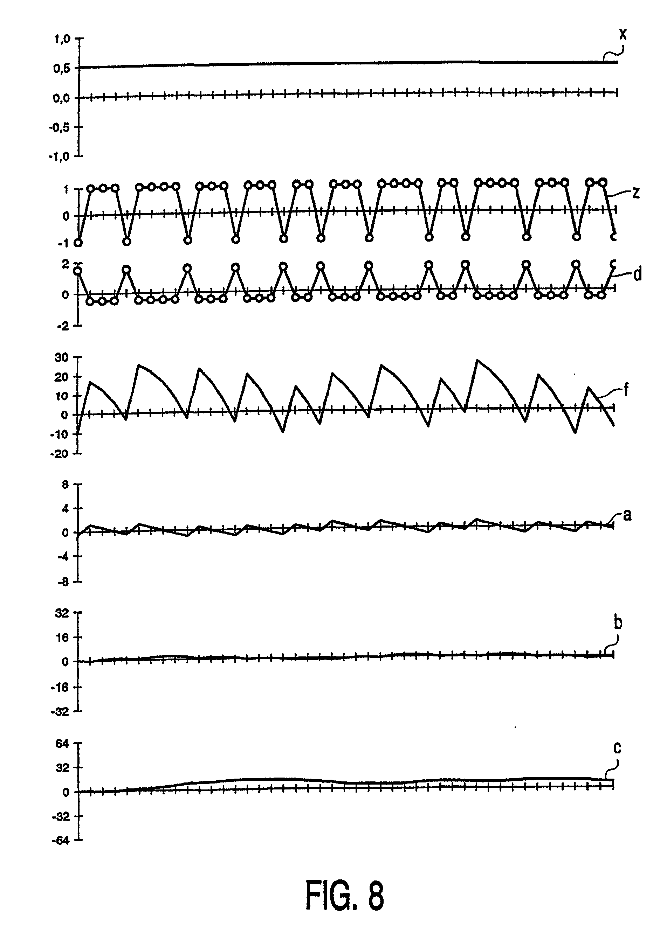

An arrangement for embedding supplemental data in a sigma-delta modulated signal in accordance with the invention is shown in Fig. 6. The arrangement comprises a conventional sigma-delta modulator **6** which includes a subtracter **61**, a loop filter **62**, a polarity detector **63** and a feedback loop **64**. The subtracter **61** subtracts the encoded output signal $z$ (having the value "+1" or "-1") from the input signal $x$. The difference signal

$d$ is filtered by the filter **62.** The filtered signal $f$ is applied to the polarity detector **63** which produces, at a rate determined by a sampling frequency $f_s$ (not shown), an output bit "+1" for $f \geq 0$ and an output bit "-1" for $f < 0$. The same modification circuit **2** as shown in Fig. 1 is connected between the polarity detector **63** and the feedback loop **64.** In response to the selection signal s, the circuit **2** replaces a bit of the encoded signal y by a watermark bit w which is stored in the register **3**.

Various embodiments of the loop filter **62** are used in practical sigma-delta modulators. Throughout this description, a third-order filter is used by way of example. For completeness' sake, it is shown in Fig. 7. The filter comprises three integrators which are connected in cascade. The three integrator output signals are denoted $a, b, c,$ respectively. The filter output signal $f$ is a weighted combination of the integrator signals. In the Figure, an integer preceded by a # is shown for each integrator. Said integer denotes the maximum value the relevant integrator can keep. Signal samples exceeding the maximum value are clipped. As will become apparent later, clipping is relevant to embodiments of the sigma-delta modulator.

Fig. 8 shows waveforms to explain the operation of the arrangement if the modification circuit **2** is inactive. More particularly, the Figure shows the input signal $x$, the encoded signal $z$, the difference signal $d$, and the filtered signal $f$. The three integrator output signals $a$, $b$ and c are also shown. The average value of the sigma-delta modulator output signal represents the input level. In this example, the input signal $x$ is a 0.5V dc level, which is encoded as a bitstream comprising (on average) three "+1" bits and one "-1" bit, in accordance with:

$$\frac{3 \times (+1) + 1 \times (-1)}{4} = 0.5$$

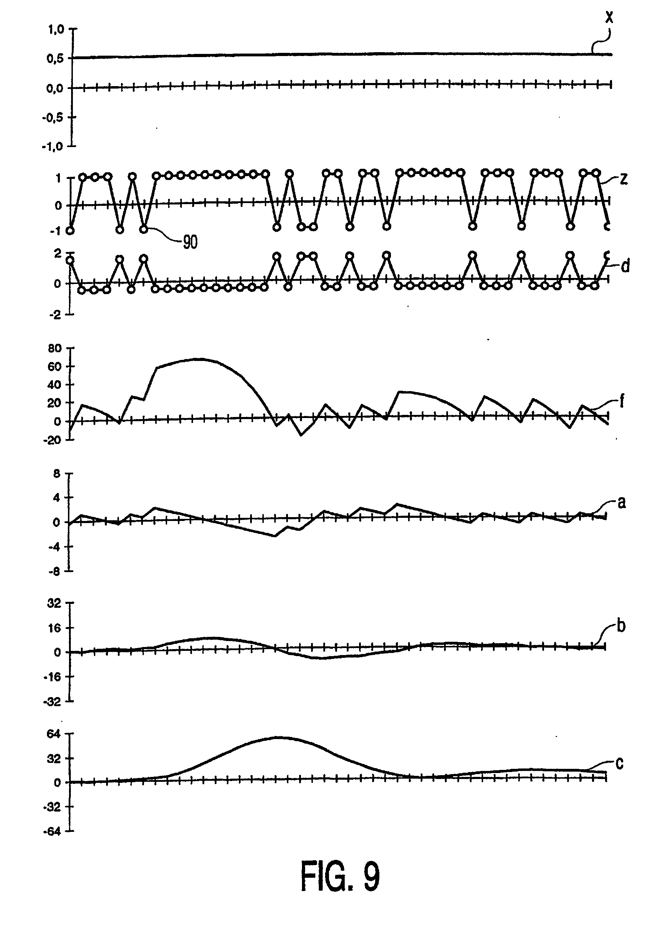

Fig. 9 shows waveforms to illustrate the effect of embedding a watermark bit **90** in tile output encoded signal $z$. The same signals as in Fig. 8 are shown. A comparison of both Figures shows that the watermark bit introduces longer runs of the same bit values in the encoded signal $z$, which is an indication of an increase of the quantization noise. The watermark also causes large signal amplitudes to occur in the integrators, particularly in the third integrator output signal c. Obviously, this holds only if the watermark bit and the 'regular' output bit have opposite values.

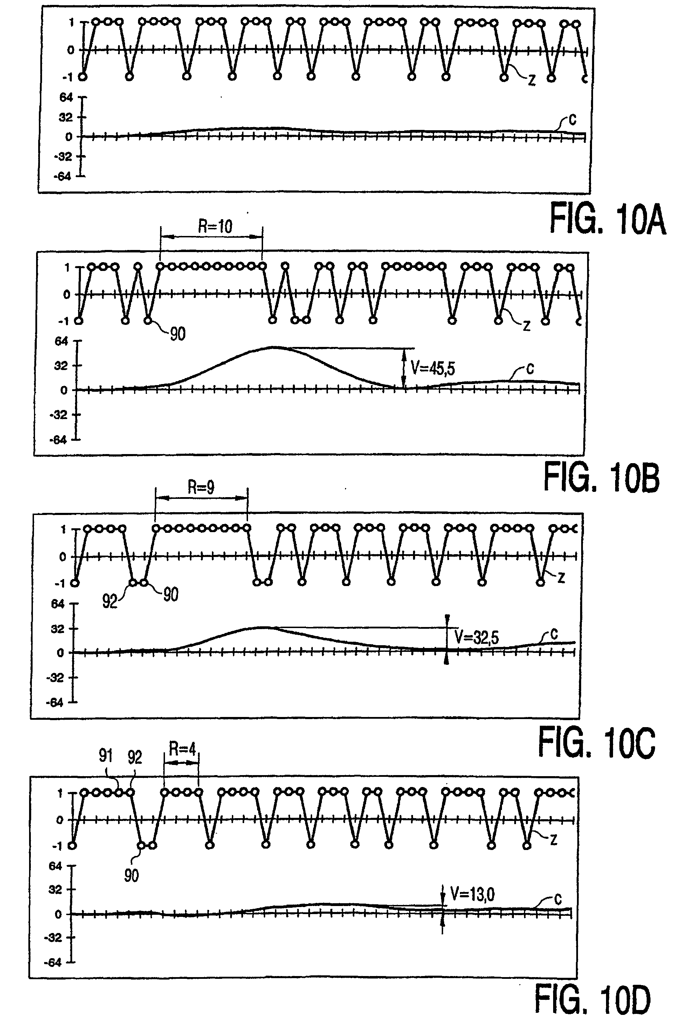

Figs. 10A-10D show the encoded signal $z$ and the third integrator output signal c under various conditions. The waveforms shown in Figs. 10A and 10B are the same as the corresponding waveforms already shown in Figs. 8 and 9, i.e. without and with the watermark bit **90,** respectively. Fig. 10C illustrates the effect of setting look-ahead bits **91** and **92** to "+1" and "-1", respectively. By comparison with Fig. 10B, it can be seen that the third integrator output signal amplitude is reduced and the length of successive is in the encoded signal is shortened. Accordingly, the quantization error is reduced. Fig. 10D shows that the performance of the sigma-delta modulator is even further improved by another setting of look-ahead bits, viz. by setting both look-ahead bits **91** and **92** to "+1".

The algorithm for determining which combination of look-ahead bits yields the best encoding quality may be the same as already described for delta modulators with reference to Fig. 5. That is, the quality $Q(c)$ of encoding a given sequence of input samples (e.g. $x_0$.. $x_{20}$) is determined for various combinations $c$ of look-ahead bits (e.g. $z_0..z_2$). The output sequence corresponding to the highest encoding quality $Q$ is then selected. Because the decoded signal is not available in a sigma-delta encoder, the mean square error is a less attractive criterion for encoding quality. The following parameters have been found to be very suitable to represent the encoding quality $Q$. They have the additional advantage that they can easily be calculated.

* The longest run of successive same values in the sequence $z_0..z_{20}$. Said longest runs are denoted R in Figs. 10B-10D. The sequence having the "shortest longest" run is then selected. Obviously, the sequence for which R=4 (Fig. 10D) is the best choice in the present example.
* The peak-to-peak amplitude occurring in a given integrator. The peak-to-peak amplitude in the third integrator is denoted V in Figs. 10B-10D. The sequence having the lowest amplitude is then selected. Again, the sequence shown in Fig. 10D appears to be the best choice. It has been found that the third integrator is very suitable, even when a higher-order (>3) filter is used.
* The mean deviation of the signal values in a given integrator.

A further criterion for selecting a combination of look-ahead bits may be the presence (or absence) of overflow in a given integrator. Because sigma-delta modulators are very sensitive to input signal levels (in contrast to delta modulators which are sensitive to input signal slopes), overflow can easily occur in response to embedding a watermark bit. As already mentioned with reference to Fig. 7, the integrators are protected against overflow by a clipping mechanism which keeps each integrator's output signal at a maximum value.

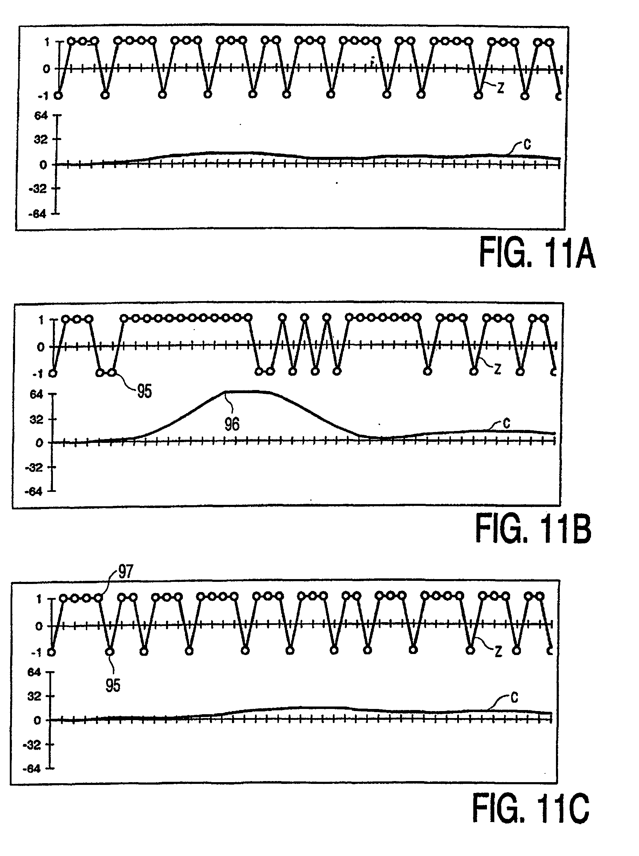

Figs. 11A-C show the encoded signal $z$ and the third integrator output signal c under clipping conditions. Again, the input signal is 0.5V dc. For reference, Fig. 11A shows the signals without watermarking. In Fig. 11B, a watermark bit **95** has been embedded in the encoded signal. Its position differs slightly from the position of watermark bit 90 in the previous examples. Reference numeral **96** denotes clipping of the third integrator due to embedding the watermark bit **90**. In an embodiment of the modification circuit, different combinations of look-ahead bits are tested until a combination is found in which clipping no longer occurs. An example thereof is shown in Fig. 11B which shows the effect of setting look-ahead bit **97** to "+1".

In summary, a method and arrangement for watermarking an audio or video signal is disclosed. The signal is encoded by an encoder which includes a feedback loop to control the encoding process, such as a DPCM encoder or a (sigma-)delta modulator. The watermark is embedded by modifying selected samples of the encoded signal. Said modifying is carried out before the encoded signal is fed back so that quantization errors which are introduced by the embedded watermark will be eliminated by subsequent encoding operations. In addition, one or more samples preceding the selected sample are also modified in such a way that the error induced by the watermark is further reduced. This is achieved by "looking ahead" which (combination of) preceding sample modifications yields the best encoding quality.

## Claims

1. A method of embedding supplemental data in a signal (x), comprising the steps of

   a) encoding (52) the signal in accordance with an encoding process which includes the step of feeding back (14) the encoded signal (y) to constitute a predictive encoding process; and
   b) modifying (51) at least one selected sample (21) of the encoded signal to represent said supplemental data,

   **characterised in that** the step of modifying the selected sample is carried out prior to said feedback of the encoded signal and includes modifying (54) at least one further sample (22) of the encoded signal preceding the selected sample if said further sample modification is found to improve the quality (Q(c)) of said encoding process by reducing a disturbance of the encoding process caused by the modification of the selected sample.

2. The method as claimed in claim 1, wherein the step of further modifying comprises successively encoding a segment of the signal with different combinations of further modified samples (90, 91, 92) until a combination corresponding to a higher encoding quality has been found.

3. The method as claimed in claim 1, wherein the step of further modifying comprises successively encoding a segment of the signal with different combinations of further modified samples (90, 91, 92), determining the encoding quality for each combination, and selecting the combination corresponding to the highest encoding quality.

4. The method as claimed in claim 1, comprising the step of decoding the encoded signal and determining the amount of quantisation error between the decoded signal and the input signal, wherein the encoding quality is represented by said amount of quantisation error.

5. The method as claimed in claim 1, wherein the encoding is unity bit encoding.

6. The method as claimed in claim 5, wherein the encoding is sigma-delta modulation.

7. The method as claimed in claim 6, wherein the encoding quality is represented by the longest run of successive same values of the encoded signal with embedded supplemental data.

8. The method as claimed in claim 6, wherein the encoding quality is represented by the peak-to-peak amplitude occurring in a selected stage of a loop filter in the sigma-delta modulator.

9. The method as claimed in claim 6, wherein the encoding quality is represented by the mean deviation of the amplitudes in a selected stage of a loop filter in the sigma-delta modulator.

10. The method as claimed in claim 6, wherein the encoding quality is represented by the occurrence of a maximum amplitude value in a selected stage of a loop filter in the sigma-delta modulator.

11. An arrangement for embedding supplemental data in a signal (x), comprising

a) an encoder (1) for encoding the signal including a feedback loop (14) for feeding back the encoded signal (y) to constitute a predictive encoding process; and
b) means (2) for modifying at least one selected sample (21) of the encoded signal to represent said supplemental data,

**characterised in that** the feedback loop is connected to feed back the modified encoded signal (z), the modifying means being arranged to modify at least one further sample (22) of the encoded signal preceding the selected sample if said further sample modification is found to improve the quality (Q(c)) of said encoding process by reducing a disturbance of the encoding process caused by the modification of the selected sample.

12. The arrangement as claimed in claim 11, wherein the encoder is a unity bit encoder.

13. The arrangement as claimed in claim 11, wherein the encoder is a sigma-delta modulator.

14. A signal (z) with embedded supplemental data, generated in accordance with the method steps of claim 1.

15. A storage medium having stored thereon a signal as claimed in claim 14.

**Patentansprüche**

1. Verfahren zum Integrieren zusätzlicher Daten in einem Signal (x), wobei dieses Verfahren die nachfolgenden Verfahrensschritte umfasst:

a) das Codieren (52) des Signals entsprechend einem Codierungsprozess, der den Verfahrensschritt der Rückkopplung (14) des codierten Signals (y) umfasst, und zwar zum Bilden eines prädiktiven Codierungsprozesses; und
b) das Modifizieren (51) wenigstens eines selektierten Abtastwertes (21) des codierten Signals um die genannten zusätzlichen Daten darzustellen,

**dadurch gekennzeichnet, dass** der Verfahrensschritt der Modifikation des selektierten Abtastwertes vor der genannten Rückkopplung des codierten Signals durchgeführt wird und das Modifizieren (54) wenigstens eines weiteren Abtastwertes (22) des codierten Signals umfasst, das dem selektierten Abtastwert vorhergeht, wenn es sich herausstellt, dass die genannte weitere Abtastwertmodifikation die Qualität (Q(c)) des genannten Codierungsprozesses dadurch verbessert, dass eine Störung des Codierungsprozesses, verursacht durch die Modifikation des selektierten Abtastwertes, reduziert wird.

2. Verfahren nach Anspruch 1, wobei der Verfahrensschritt der weiteren Modifikation nacheinander das Codieren eines Segmentes des Signals mit verschiedenen Kombinationen weiterer modifizierter Abtastwerte (90, 91, 92) umfasst, bis eine Kombination entsprechend einer höheren Codierungsqualität gefunden worden ist.

3. Verfahren nach Anspruch 1, wobei der Verfahrensschritt der weiteren Modifikation nacheinander das Codieren eines Segmentes des Signals mit verschiedenen Kombinationen weiterer modifizierter Abtastwerte (90, 91, 92), das Ermitteln der Codierungsqualität für jede Kombination, und das Selektieren der Kombination entsprechend der höchsten Codierungsqualität umfasst.

**4.** Verfahren nach Anspruch 1, das den Verfahrensschritt der Decodierung des codierten Signals und der Ermittlung des Betrags an Quantisierungsfehlem zwischen dem decodierten Signal und dem Eingangssignal umfasst, wobei die Codierungsqualität durch den genannten Betrag an Quantisierungsfehlern dargestellt wird.

**5.** Verfahren nach Anspruch 1, wobei die Codierung eine Ein-Bit-Codierung ist.

**6.** Verfahren nach Anspruch 5, wobei die Codierung Sigma-Delta-Modulation ist.

**7.** Verfahren nach Anspruch 6, wobei die Codierungsqualität durch den längsten Lauf aufeinander folgender Werte des codierten Signals mit integrierten zusätzlichen Daten dargestellt wird.

**8.** Verfahren nach Anspruch 6, wobei die Codierungsqualität durch die Spitzezu-Spitze-Amplitude dargestellt wird, die in einer selektierten Stufe eines Schleifenfilters in dem Sigma-Delta-Modulator auftritt.

**9.** Verfahren nach Anspruch 6, wobei die Codierungsqualität durch die Hauptabweichung der Amplituden in einer selektierten Stufe eines Schleifenfilters in dem Sigma-Delta-Modulator dargestellt wird.

**10.** Verfahren nach Anspruch 6, wobei die Codierungsqualität durch das Auftreten eines maximalen Amplitudenwertes in einer selektierten Stufe eines Schleifenfilters in dem Sigma-Delta-Modulator dargestellt wird.

**11.** Anordnung zum Integrieren zusätzlicher Daten in einem Signal (x), wobei diese Anordnung die nachfolgenden Elemente umfasst:

a) einen Codierer (1) zum Codieren des Signals mit einer Rückkopplungsschleife (14) zum Rückkoppeln des codierten Signals (y) zum Bilden eines prädiktiven Codierungsprozesses; und
b) Mittel (2) zum Modifizieren wenigstens eines selektierten Abtastwertes (21) des codierten Signals um die genannten zusätzlichen Daten darzustellen,

**dadurch gekennzeichnet, dass** die Rückkopplungsschleife vorgesehen ist zum Rückkoppeln des modifizierten codierten Signals (z), wobei die Modifikationsmittel dazu vorgesehen sind, wenigstens einen weiteren Abtastwert (22) desjenigen codierten Signals zu modifizieren, das dem selektierten Abtastwert vorhergeht, wenn es sich herausgestellt hat, dass die genannte weitere Abtastmodifikation die Qualität (Q(c)) des genannten Codierungsprozesses dadurch verbessert, dass eine Störung des Codierungsprozesses, verursacht durch die Modifikation des selektierten Abtastwertes, reduziert wird.

**12.** Anordnung nach Anspruch 11, wobei der Codierer ein Ein-Bit-Codierer ist.

**13.** Anordnung nach Anspruch 11, wobei der Codierer ein Sigma-Delta-Modulator ist.

**14.** Signal (z) mit integrierten zusätzlichen Daten, erzeugt nach den Verfahrensschritten nach Anspruch 1.

**15.** Speichermittel, auf dem ein Signal nach Anspruch 14 gespeichert ist.

**Revendications**

**1.** Procédé d'intégration de données complémentaires dans un signal (x), comprenant les étapes suivantes :

a) codage (52) du signal suivant un processus de codage qui comprend l'étape de réinjection (14) du signal codé (y) pour former un processus de codage prédictif, et
b) modification (51) d'au moins un échantillon (21) sélectionné du signal codé pour représenter lesdites données complémentaires,

**caractérisé en ce que** l'étape de modification de l'échantillon sélectionné est effectuée avant ladite réinjection du signal codé et comprend la modification (54) d'au moins un autre échantillon (22) du signal codé précédant l'échantillon sélectionné si ladite autre modification d'échantillon s'avère améliorer la qualité (Q(c)) dudit processus de codage en réduisant une perturbation du processus de codage provoquée par la modification de l'échantillon sélectionné.

**2.** Procédé suivant la revendication 1, dans lequel l'étape de modification supplémentaire comprend successivement le codage d'un segment du signal avec différentes combinaisons d'autres échantillons modifiés (90, 91, 92) jusqu'à ce qu'une combinaison correspondant à une qualité de codage supérieure soit trouvée.

**3.** Procédé suivant la revendication 1, dans lequel l'étape de modification supplémentaire comprend successivement le codage d'un segment du signal avec différentes combinaisons d'autres échantillons modifiés (90, 91, 92), la détermination de la qualité de codage pour chaque combinaison et la sélection de la combinaison correspondant à la qualité de codage la plus élevée.

**4.** Procédé suivant la revendication 1, comprenant l'étape de décodage du signal codé et de détermination de la quantité d'erreur de quantification entre le signal décodé et le signal d'entrée, dans lequel la qualité de codage est représentée par ladite quantité d'erreur de quantification.

**5.** Procédé suivant la revendication I, dans lequel le codage est un codage bit unité.

**6.** Procédé suivant la revendication 5, dans lequel le codage est une modulation sigma-delta.

**7.** Procédé suivant la revendication 6, dans lequel la quantité de codage est représentée par la plus longue séquence de valeurs identiques successives du signal codé avec des données complémentaires intégrées.

**8.** Procédé suivant la revendication 6, dans lequel la qualité de codage est représentée par l'amplitude crête à crête apparaissant dans un étage sélectionné d'un filtre à boucle dans le modulateur sigma-delta.

**9.** Procédé suivant la revendication 6, dans lequel la qualité de codage est représentée par l'écart moyen des amplitudes dans un étage sélectionné d'un filtre à boucle dans le modulateur sigma-delta.

**10.** Procédé suivant la revendication 6, dans lequel la qualité de codage est représentée par l'apparition d'une valeur d'amplitude maximale dans un étage sélectionné d'un filtre à boucle dans le modulateur sigma-delta.

**11.** Montage pour intégrer des données complémentaires dans un signal (x), comprenant :

a) un codeur (1) pour coder le signal comprenant une boucle de rétroaction (14) pour réinjecter le signal codé (y) pour former un processus de codage prédictif, et
b) des moyens (2) pour modifier au moins un échantillon (21) sélectionné du signal codé pour représenter lesdites données complémentaires,

**caractérisé en ce que** la boucle de rétroaction est connectée pour réinjecter le signal codé modifié (z), les moyens de modification étant propres à modifier au moins un autre échantillon (22) du signal codé précédant l'échantillon sélectionné si ladite autre modification d'échantillon s'avère améliorer la qualité (Q(c)) dudit processus de codage en réduisant une perturbation du processus de codage provoquée par la modification de l'échantillon sélectionné.

**12.** Montage suivant la revendication 11, dans lequel le codeur est un codeur bit unité.

**13.** Montage suivant la revendication 11, dans lequel le codeur est un modulateur sigma-delta.

**14.** Signal (z) comportant des données complémentaires intégrées, généré conformément aux étapes du procédé de la revendication 1.

**15.** Support de mémorisation sur lequel est mémorisé un signal suivant la revendication 14.

FIG. 1

FIG. 6

FIG. 7

FIG. 2

FIG. 3

FIG. 4

$c = 0$ — 50

$z_0 .. z_2 = c$
$z_3 = w$ — 51

$\Delta (x_0 .. x_{20})$ — 52

$Q(c)$ — 53

$c = c + 1$ — 54

$c = 8?$ — 55  N  Y

$Q(c)_{max}$ — 56

$z_0 .. z_{20}$ — 57

$\Delta (x_{21} .. x_{99})$ — 58

$z_{21} .. z_{99}$ — 59

# FIG.5

FIG. 8

FIG. 9

FIG. 10A

FIG. 10B

FIG. 10C

FIG. 10D

FIG. 11A

FIG. 11B

FIG. 11C